# EUROPEAN PATENT APPLICATION

(11) **EP 1 223 721 A2**
(43) Date of publication of application: **17.07.2002**
(21) Application number: 01124883.8
(22) Date of filing: 18.10.2001
(51) Int. Cl.: H04L 29/06

(54) **Systems and methods for automatically formulating response to authentication requests from secured servers**

(30) Priority: 31.10.2000 US 704192
(71) Applicant: MICROSOFT CORPORATION, Redmond, Washington 98052-6399 (US)
(72) Inventor: Chen, Ling Tony, Bellevue, Washington 98006 (US); Huang, Chiyuan, Bellevue, Washington 98006 (US); Van Antwerp, Mark D., Redmond, Washington 98053 (US)
(74) Representative: Grünecker, Kinkeldey, Stockmair & Schwanhäusser Anwaltssozietät

(57) **Abstract**

Systems and methods for automatically formulating appropriate responses to authentication requests from secured servers are described herein. When a primary server attempts to access a secured remote server, the remote server transmits an authentication request to the primary server. An authentication response manager identifies certain criteria in the authentication request and formulates appropriate response credentials to transmit to the remote server to access secured content on the remote server.

Authentication response modules can be plugged into the authentication response manager to adapt to new secure servers to be accessed by the primary server or to new technology. The authentication response manager is further configured to identify authentication requests from several remote servers and to automatically provide the appropriate authentication credentials to each server.

## Description

### TECHNICAL FIELD

The systems and methods described herein relate to authenticating computer systems on a server-client network. More particularly, the described implementations relate to automatically formulating appropriate responses to authentication requests from secured servers.

### BACKGROUND

Secured servers are server computer systems that store content that is restricted to particular clients. When a client requests access to a secured server, the secured server requires that the client provide credentials to authenticate the client and insure that the client is authorized to access the secured content on the server. If the client provides an appropriate response, then the client is allowed to access the information stored on the server. If, however, incorrect authentication credentials are provided, then the client is denied access to the server.

In a typical situation, a user who wants to access a secured server enters a network address - such as an Internet universal resource locator (URL) - to locate the server. The server detects the communication from the client and transmits an authentication request to the client. The user at the client receives the authentication request and types in an appropriate response to the request, such as a user name and password. If the response is correct, the user is then allowed to access secured information on the server.

A problem arises when there is no user at the client to provide the response to the authentication request. In a situation in which a client accesses a primary server, there are times when the client may search for information that exists on a remote server. Usually, the primary server directs the client to the remote server and the client gets information directly from the remote server. But several clients may be accessing the remote server at the same time. This is not a problem unless the content on the remote server requires a large amount of bandwidth. If the content on the remote server is media content and there are several clients downloading the content, the bandwidth capacity of the remote server can easily be exceeded.

To avoid this problem, in such a situation the primary server does not redirect the client to the remote server. Instead, the primary server downloads the information from the remote server and the primary server can then allow several clients to access the content. This redistributes some of the load from the remote server to the primary, and other, servers. However, when the media content on the remote server is secure, then the remote server will require authentication by the primary server before allowing the primary server to access the secured media content on the remote server.

In this situation, there is no human at the primary server to provide a response to an authentication request from the remote server. Therefore, a need exists for an authentication manager on the primary server that can automatically generate the proper authentication response for the primary server. Furthermore, since the primary server may require access to several secured servers that require different authentication responses, the authentication manager should determine the correct response for each particular server and provide the response to gain access to the secured content. Also, the authentication manager should be modular easily adaptable to respond to new remote servers accessed by the primary server or to respond to new protocols and requests.

### SUMMARY

Systems and methods for managing modular authentication response modules are described herein that automatically formulate an appropriate response to an authentication challenge received from a secure server. Furthermore, an authentication response manager is configured to formulate responses to challenges from multiple servers.

Plug-in modules are developed and installed in a primary server by a system administrator according to authentication policies used by remote secured servers to which the primary server will require access. An authentication response manager (ARM) is configured to receive authentication challenges from one or more remote servers and pass the information to one or more authentication response modules. The ARM manages the data passed to and received from the authentication response modules and the remote servers.

Parameters passed to the ARM include the protocol utilized in the authentication challenge, a server identifier and a network address - such as an Internet universal resource locator (URL) - of the remote content. An authentication response module is pre-configured with a table that identifies an appropriate response to a challenge that contains specific values for these parameters together with the protocol name of the protocol used by the challenge. The table is searched for an entry that matches the challenge parameters. If a match is found, credentials are retrieved from the table entry that matches the challenge and the ARM presents the credentials to the remote server. In some cases, the credentials are not presented directly to the remote server, but are used by the ARM to formulate an appropriate response.

In a preferred implementation, wildcard table entries are used to make the table and searches of the table more efficient. Furthermore, several authentication response modules may be included in the primary server. When an authentication challenge is received, a search for an appropriate response is carried out in a first authentication response module. If no match is found, the search is performed in a second module, and so on. If no match is found in any of the modules, then authentication credentials are not presented and the secured content cannot be accessed.

For remote servers that have several transmission stages in an authentication request, there is a need to provide more than one response. In such cases, the credentials received from a module table are used to formulate the responses. Upon receipt of the authentication request, the ARM retrieves the credentials from a table and manipulates the information received from the remote server with the credentials to formulate each responsive transmission.

### BRIEF DESCRIPTION OF THE DRAWINGS

A more complete understanding of exemplary methods and arrangements of the present invention may be had by reference to the following detailed description when taken in conjunction with the accompanying drawings wherein:
Fig. 1 is an exemplary computer system on which the present invention may be implemented.
Fig. 2 is a block diagram of a primary server that communicates with several clients and several remote servers over the Internet.
Fig. 3 is an illustration of two authentication response tables.
Fig. 4 is a flow diagram outlining a method for automatically formulating responses to authentication requests from secure servers.
Fig. 5 is a flow diagram outlining a method for searching for specific data in an authentication response module.

### DETAILED DESCRIPTION

The invention is illustrated in the drawings as being implemented in a suitable computing environment. Although not required, the invention will be described in the general context of computer-executable instructions, such as program modules, to be executed by a computing device, such as a personal computer or a hand-held computer or electronic device. Generally, program modules include routines, programs, objects, components, data structures, etc. that perform particular tasks or implement particular abstract data types. Moreover, those skilled in the art will appreciate that the invention may be practiced with other computer system configurations, including multi-processor systems, microprocessor-based or programmable consumer electronics, network PCs, minicomputers, mainframe computers, and the like. The invention may also be practiced in distributed computing environments where tasks are performed by remote processing devices that are linked through a communications network. In a distributed computing environment, program modules may be located in both local and remote memory storage devices.

### Exemplary Computer Environment

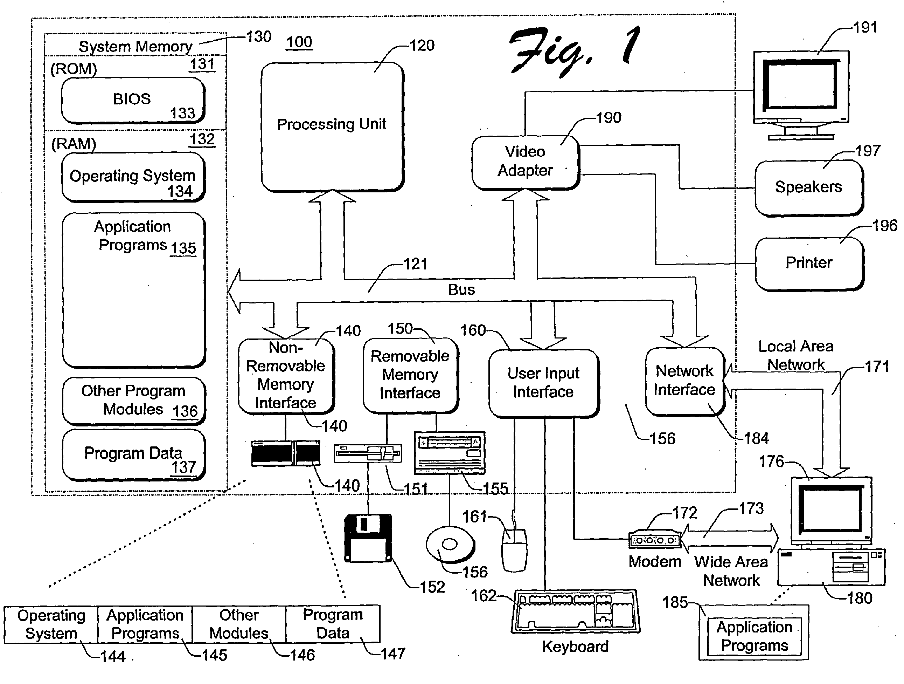

The various components and functionality described herein are implemented with a number of individual computers. Fig. 1 shows components of typical example of such a computer, referred by to reference numeral 100. The components shown in Fig. 1 are only examples, and are not intended to suggest any limitation as to the scope of the functionality of the invention; the invention is not necessarily dependent on the features shown in Fig. 1.

Generally, various different general purpose or special purpose computing system configurations can be used. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The functionality of the computers is embodied in many cases by computer-executable instructions, such as program modules, that are executed by the computers. Generally, program modules include routines, programs, objects, components, data structures, etc. that perform particular tasks or implement particular abstract data types. Tasks might also be performed by remote processing devices that are linked through a communications network. In a distributed computing environment, program modules may be located in both local and remote computer storage media.

The instructions and/or program modules are stored at different times in the various computer-readable media that are either part of the computer or that can be read by the computer. Programs are typically distributed, for example, on floppy disks, CD-ROMs, DVD, or some form of communication media such as a modulated signal. From there, they are installed or loaded into the secondary memory of a computer. At execution, they are loaded at least partially into the computer's primary electronic memory. The invention described herein includes these and other various types of computer-readable media when such media contain instructions programs, and/or modules for implementing the steps described below in conjunction with a microprocessor or other data processors. The invention also includes the computer itself when programmed according to the methods and techniques described below.

For purposes of illustration, programs and other executable program components such as the operating system are illustrated herein as discrete blocks, although it is recognized that such programs and components reside at various times in different storage components of the computer, and are executed by the data processor(s) of the computer.

With reference to Fig. 1, the components of computer 100 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISAA) bus, Video Electronics Standards Association (VESA) local bus, and Peripheral Component Interconnect (PCI) bus also known as the Mezzanine bus.

Computer 100 typically includes a variety of computer-readable media. Computer-readable media can be any available media that can be accessed by computer 100 and includes both volatile and nonvolatile media, removable and non-removable media. By way of example, and not limitation, computer-readable media may comprise computer storage media and communication media. "Computer storage media" includes both volatile and nonvolatile, removable and non-removable media implemented in any method or technology for storage of information such as computer-readable instructions, data structures, program modules, or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer-readable instructions, data structures, program modules or other data in a modulated data signal such as a carrier wave or other transport mechanism and includes any information delivery media. The term "modulated data signal" means a signal that has one or more if its characteristics set or changed in such a manner as to encode information in the signal. By way of example, and not limitation, communication media includes wired media such as a wired network or direct-wired connection and wireless media such as acoustic, RF, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 100, such as during start-up, is typically stored in ROM 131. RAM 132 typically contains data and/or program modules that are immediately accessible to and/or presently being operated on by processing unit 120. By way of example, and not limitation, Fig. 1 illustrates operating system 134, application programs 135, other program modules 136, and program data 137.

The computer 100 may also include other removable/non-removable, volatile/nonvolatile computer storage media. By way of example only, Fig. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through an non-removable memory interface such as interface 140, and magnetic disk drive 151 and optical disk drive 155 are typically connected to the system bus 121 by a removable memory interface such as interface 150.

The drives and their associated computer storage media discussed above and illustrated in Fig. 1 provide storage of computer-readable instructions, data structures, program modules, and other data for computer 100. In Fig. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 100 through input devices such as a keyboard 162 and pointing device 161, commonly referred to as a mouse, trackball, or touch pad. Other input devices (not shown) may include a microphone, joystick, game pad, satellite dish, scanner, or the like. These and other input devices are often connected to the processing unit 120 through a user input interface 160 that is coupled to the system bus, but may be connected by other interface and bus structures, such as a parallel port, game port, or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 195.

The computer may operate in a networked environment using logical connections to one or more remote computers, such as a remote computer 180. The remote computer 180 may be a personal computer, a server, a router, a network PC, a peer device or other common network node, and typically includes many or all of the elements described above relative to computer 100, although only a memory storage device 181 has been illustrated in Fig. 1. The logical connections depicted in Fig. 1 include a local area network (LAN) 171 and a wide area network (WAN) 173, but may also include other networks. Such networking environments are commonplace in offices, enterprise-wide computer networks, intranets, and the Internet.

When used in a LAN networking environment, the computer 100 is connected to the LAN 171 through a network interface or adapter 170. When used in a WAN networking environment, the computer 100 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 100, or portions thereof, may be stored in the remote memory storage device. By way of example, and not limitation, Fig. 1 illustrates remote application programs 185 as residing on memory device 181. It will be appreciated that the network connections shown are exemplary and other means of establishing a communications link between the computers may be used.

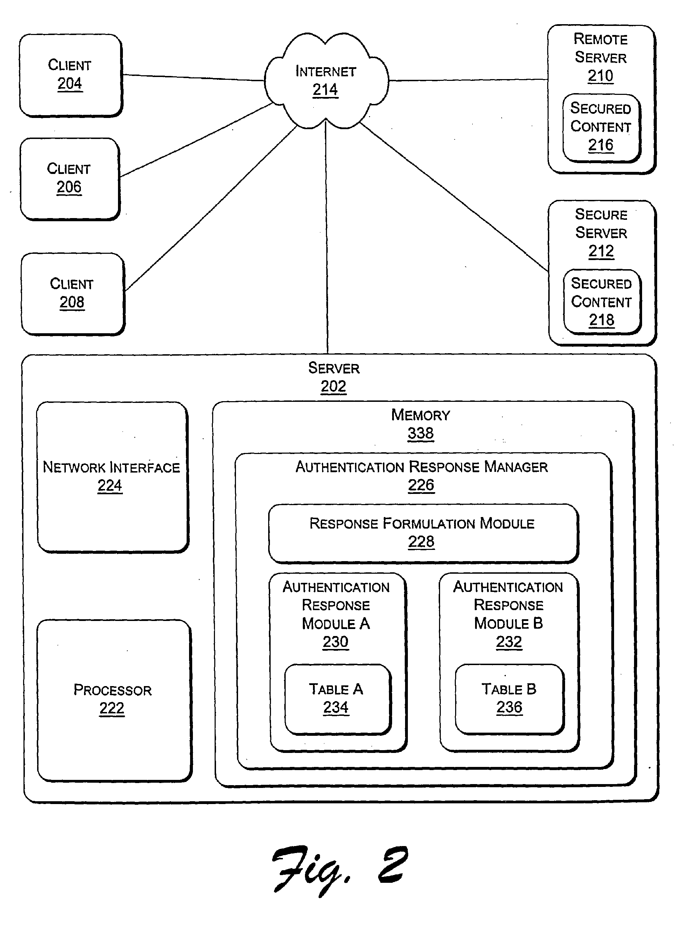

Fig. 2 is a block diagram of a distributed network 200 that includes a primary server 202 that communicates with several clients 204, 206, 208 and several remote servers 210, 212 over the Internet 214. Remote server 210 includes secured content 216, and remote server 212 includes secured content 218.

The primary server 202 includes memory 220, a processor 222 and a network interface 224. An authentication response manager 226 is stored in the memory 220 of the primary server 202. The authentication response manager (ARM) includes a response formulation module 228, authentication response module A 230, and authentication response module B 232. Authentication response table A 234 is stored in authentication response module A 230. Authentication response module B 236 is stored in authentication response module B 232.

The clients 204 ― 208 connect to the primary server 202 via the Internet 214 and browse content on the primary server 202 in typical fashion. If any one of the clients 204 ― 208 enters instructions to view or download content that is stored on another server (not shown), then the primary server 202 directs the client 204 ― 208 to the Internet address of the server that contains the content. If, however, the content sought by the client 204 ― 208 is media content that is stored on a remote server 210, 212, then the primary server 202 is configured to download the content from the remote server 210, 212 to the memory 220 of the primary server 202 and distribute the content to the clients 204 ― 208 from the memory 220. It is noted that there may be several instances in which a primary server would download content from a remote server. However, for convenience purposes, only the instance in which media content is downloaded from the remote server to the primary server will be discussed.

For convenience, further discussion will refer to client 204 and remote server 210 with secured content 216. However, it is noted that reference to client 204 can also mean client 206 or client 208, and reference to remote server 210 can also mean remote server 212 with secured content 218. Multiple clients and remote servers are shown to illustrate that the primary server 202 is configured to communicate with several clients and several servers.

Since the remote server 210 includes secured content 216, when the primary server 202 attempts to access the remote server 210, the remote server 210 will transmit an authentication request, or a challenge, to the primary server 202 before the primary server 202 is allowed to access the secured content 216. Further aspects of such a configuration will be discussed in greater detail below.

It is noted that the remote server 210 could also contain unsecured content in a different directory than a directory in which the secured content 216 is stored. In this case, the primary server 202 would be challenged only when attempting to access the directory storing the secured content 216.

When the primary server 202 receives a request for authentication, the authentication response manager 226 identifies certain authentication criteria of the authentication request. The response formulation module 228 takes the authentication criteria and refers to authentication response module A 230 to determine authentication response credentials that can be used to formulate a response to the authentication request. If the response formulation module 228 cannot determine an appropriate response to the authentication request from authentication module 230, the response formulation module 228 attempts to determine authentication response credentials from authentication module B 232. If no credentials are obtained, then the primary server 202 cannot access the secured content 216.

If appropriate authentication credentials are obtained from module A 230 or module B 232, then the response formulation module 228 uses the credentials to formulate an authentication response, which is transmitted to the remote server 210 via the network interface 224 and the Internet 214. It is noted that although Fig. 2 shows two authentication modules 230, 232, the authentication modules 230, 232 are plug-ins and, therefore, can be installed or removed. Furthermore, additional authentication modules may be installed as a need arises, such as when the primary server 202 requires access to a new remote server, if new authentication credentials are utilized in an authentication request, if a new communications protocol is developed to transmit an authentication request, etc.

In the simplest instance - such as with the HTTP-Basic (hereinafter "Basic") protocol - the authentication request simply asks for a user name and a password. The primary server 202 identifies certain criteria in the request and locates the appropriate user name and password to provide for the response. Unfortunately, such a protocol provides only a minimum level of security because a third party can intercept the transmission from the primary server 202 to learn the user name and password. The third party can then access the remote server 210 using this user name and password. Furthermore, a third party could send a bogus authentication request to the primary server 202 with appropriate criteria and receive the user name and password from the primary server 202 in response to the bogus request.

To increase the level of security, some protocols require more than one request and response sequence to authenticate a client. Therefore, the response formulation module 228 is further configured to use the authentication credentials obtained from an authentication response module 230, 232 to formulate a primary response that is transmitted to the remote server 210. The remote server 210 may then use the primary response to formulate a secondary request that is sent to the primary server 202. The response formulation module 228 then formulates a secondary response that is transmitted to the remote server 210. This sequence may continue one or more other times, as the protocol requires. Because of this feature, the authentication response manager 226 is configured to identify the protocol that is used to transmit the authentication request and response accordingly.

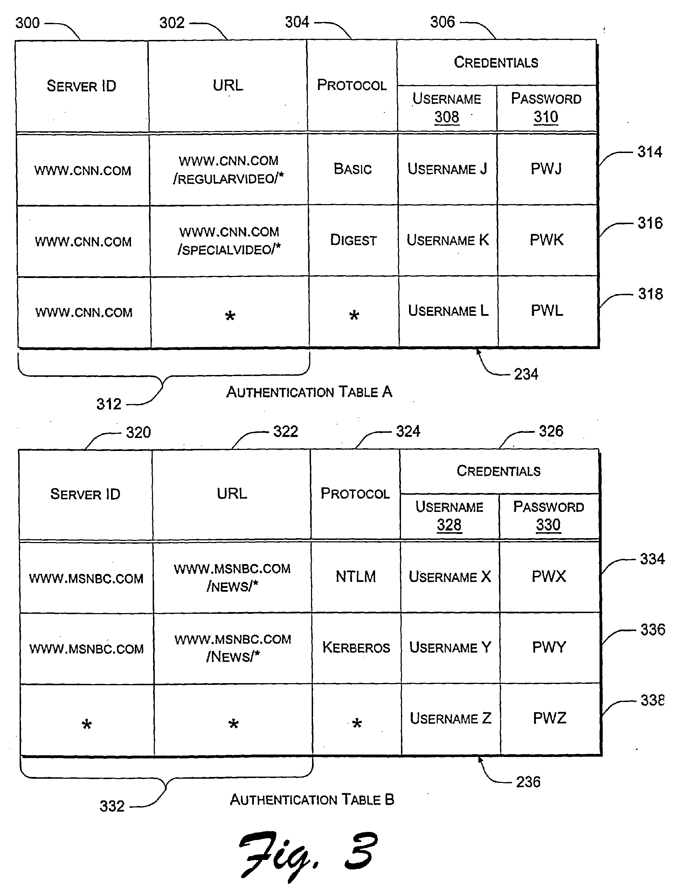

Fig. 3 depicts a more detailed illustration of authentication table A 234 and authentication table B 236. Authentication table A 234 (hereinafter "table A") includes a server identifier column 300, a network address column 302, a protocol column 304, and a credentials column 306. It is noted that the server identifier column 300 corresponds to the "Realm" in the HTTP-Basic and HTTP-Digest context. The contents of the server identifier column 300 doesn't necessarily have to be the machine name part of the URL; it could be any string. Therefore, the site "www.cnn.com" could use two different "realms," "CNN Special User" and "CNN Regular Users" depending on which part of the site is hit. Those skilled in the art will recognize that the present discussion is necessarily limited for convenience purposes, and that other site identifiers, "realms," etc. may be used in place of those shown in Fig. 3.

The credentials column 306 is shown as having two sub-columns, a user name column 308 and a password column 310. It is noted that, in one implementation, the server identifier column 300 and the network address column 302 may be a site identifier column 312, which is a single column used to identify the server and the network address. However, in the preferred implementation, the server identifier column 300 and the network address column 302 are utilized as shown. Table A 234 also includes three (3) rows, or entries, row 314, row 316 and row 318.

Authentication table B 236 (hereinafter "table B") includes a server identifier column 320, a network address column 322, a protocol column 324, and a credentials column 326. The credentials column 326 is shown as having two sub-columns, a user name column 328 and a password column 330. It is noted that ― similar to table A 234 - in one implementation, the server identifier column 320 and the network address column 322 may be a site identifier column 332, which is a single column used to identify the server and the network address. However, in the preferred implementation, the server identifier column 320 and the network address column 322 are utilized as shown. Table B 236 also includes three (3) rows, or entries, row 334, row 336 and row 338.

Each row 314 ― 318, 334 ― 338 identifies a remote server 300, a universal resource locator (URL) 302 of a partition (directory) on the remote server 210, and a protocol name 304 used in an authentication challenge to access the directory identified by the URL 302. Also included are one or more credentials 306 used to formulate an appropriate authentication response to access the directory associated with the URL 302. The credentials 306 shown in Fig. 3 include a user name 308 and a password 310 for each of the rows 314 ― 318, 334 ― 338.

The server identifier (server id) 300 for row 314 is "www.cnn.com." The URL 302 for row 314 is "www.cnn.com/regularvideo." The protocol 304 used for the authentication request in row 314 is "Basic." The user name 308 and password 310 in row 314 are "username J" and "PWJ," respectively.

Similarly, the server id 300 for row 316 is "www.cnn.com." The URL 302 for row 316 is "www.cnn.com/specialvideo." The protocol 304 used for the authentication request in row 316 is "Digest." The user name 308 and password 310 in row 316 are "username K" and "PWK," respectively.

The server id 300 for row 318 is "www.cnn.com." The URL 302 for row 314 is the wildcard symbol " * ". The protocol 304 used for the authentication request in row 318 is " * " (any protocol). The user name 308 and password 310 in row 316 are "username L" and "PWL," respectively.

Table B 236 is configured similarly to table A 234. The server id 320 for row 334 is "www.msnbc.com." The URL 322 for row 334 is "www.msnbc.com/news." The protocol 324 used for the authentication request in row 334 is "NTLM." The user name 328 and password 330 in row 334 are "username X" and "PWX," respectively.

Likewise, the server id 320 for row 336 is "www.msnbc.com." The URL 322 for row 336 is "www.msnbc.com/news." The protocol 324 used for the authentication request in row 336 is "Kerberos." The user name 328 and password 330 in row 336 are "username Y" and "PWY," respectively.

The server id 320 for row 338 is " * ". The URL 322 for row 334 is also the wildcard symbol " * ". The protocol 324 used for the authentication request in row 338 is " * ". The user name 328 and password 330 in row 336 are "username Z" and "PWZ," respectively.

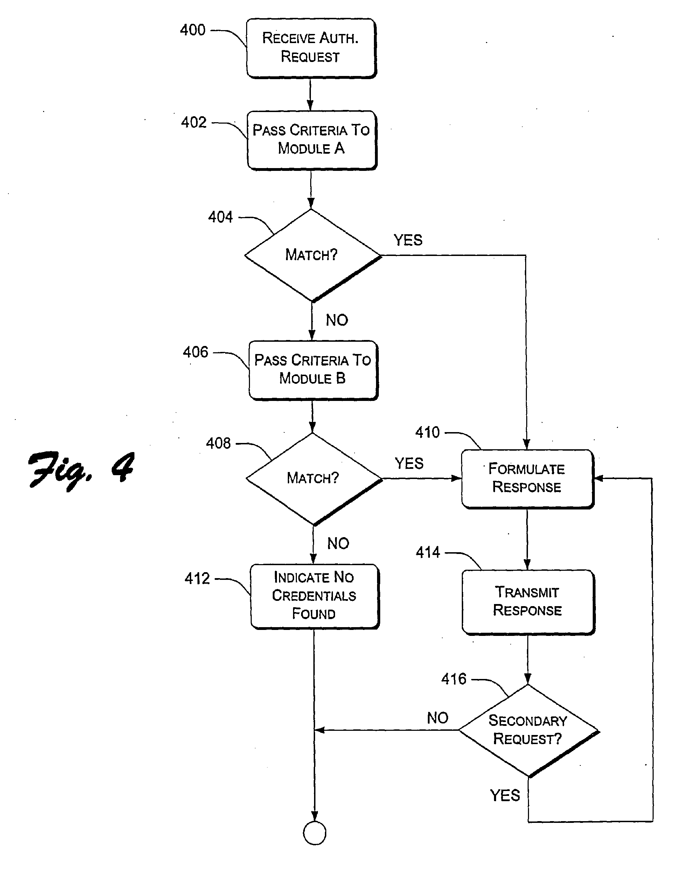

Continuing reference will be made to the elements and reference numerals of Fig. 2 and Fig. 3 in the discussion of Fig. 4. Fig. 4 is a flow diagram outlining a method for automatically formulating responses to authentication requests from secured servers. At step 400, the primary server 202 receives an authentication request from the remote server 210. The authentication response manager 226 identifies certain request criteria in the request and passes the request criteria to authentication response module A 230 at step 402. In the present example, the request criteria that are identified and passed to module A 230 are those listed in table A 234, namely, server id 300, a URL 302 for a remote server 210 directory, and a protocol 304 used to transmit the authentication request. At step 404, the authentication response manager 226 searches table A 234 for an entry that matches the request criteria. For the present example, it is assumed that the primary server 202 has attempted to access a URL address on the remote server 210 identified as "www.cnn.com/specialvideo/videoclip3.htm" and that the remote server 210 issued an authentication request in "Digest" protocol.

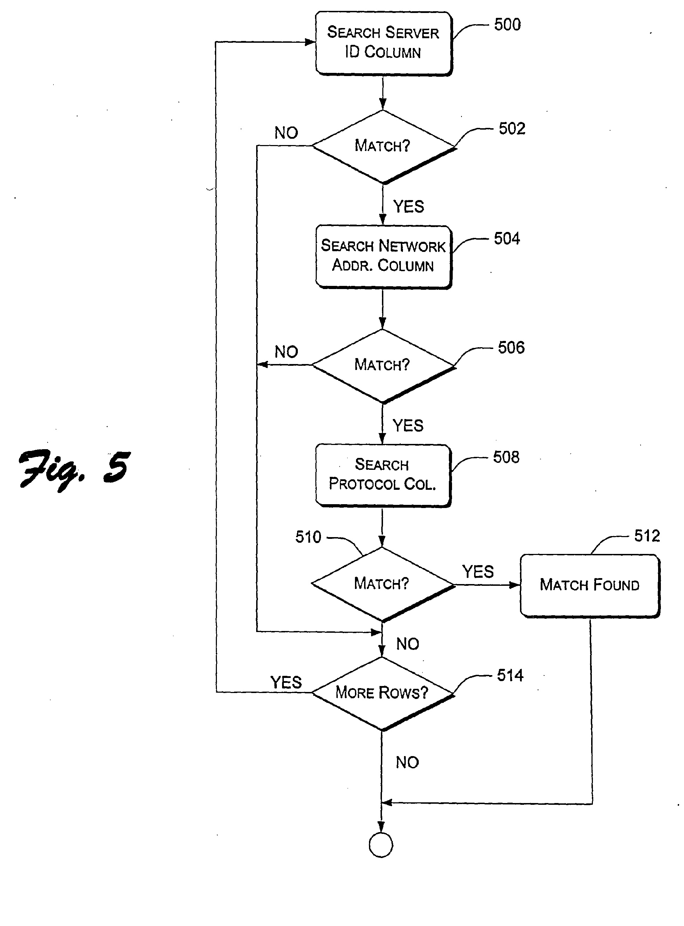

Fig. 5 is a flow diagram that depicts the steps performed by the authentication response module 226 when searching for a match with the authentication criteria. At step 500, the ARM 226 first searches the server id column 300 for a match with the server id of the request criteria. In this example, the server id in row 314 is "www.cnn.com." This matches the authentication criteria for the server id ("Yes" branch, step 502), so at step 504, the ARM 226 searches the network address column 302 for a match with the network address of the request criteria. Here, the network address for remote server 210 is "www.cnn.com/regularvideo." This does not match the search criteria ("No" branch, step 506), so the ARM 226 determines if there are more rows in table A 234 at step 514. There are more rows in table A 234 ("Yes" branch, step 514), so the process reverts to step 500.

The server id column 300 is searched again, beginning at row 316. The server id in row 316 is "www.cnn.com." This matches the server id criterion ("Yes" branch, step 502), so the ARM 226 looks to the network address column for a match at step 504. The network address in row 316 is "www.cnn.com/specialvideo/*." This matches the network address criterion ("Yes" branch, step 506), so the protocol column 304 is examined at step 508. (It is noted that the URL 302, 322 only needs to match the prefix of the requested URL). Row 316 contains "Digest" in the protocol column 304 ("Yes" branch, step 510), so at step 512, a match is confirmed and the process continues at step 404 of Fig. 4.

Referring back to Fig. 4, a match is found ("Yes" branch, step 404) in row 316, so the username 308 ("User K") and password 310 ("PWK") from row 316 are passed to the response formulation module 228, where a response is formulated at step 410 for transmission at step 414. The response is transmitted to the remote server 210 at step 414. If the remote server 210 returns a secondary authentication request to the primary server 202 ("Yes" branch, step 416), then the response formulation module 228 uses the data contained in the secondary request to formulate a secondary response at step 410. If no secondary request is received ("No" branch, step 416), then no further action is required of the ARM 226.

Now suppose that the primary server 202 receives a request from client 204 to access "www.msnbc.com/news/myvideo2.htm" and the request is formatted according to "Digest" protocol. At step 400, the remote server 202 receives the authentication request from the remote server 210. At step 404, the ARM 226 searches table A 234 for a match with the request criteria.

Referring now to Fig. 5, the ARM 226 first searches the server id column 300 for a match with the server id of the request criteria. In this example, the server id in row 314 is "www.cnn.com." This does not match the authentication criteria for the server id ("No" branch, step 502), so the ARM 226 determines if there are more rows in table A 234 at step 514. There are more rows in table A 234 ("Yes" branch, step 514), so the process again reverts to step 500.

The server id column 300 is searched again, beginning at row 316. The server id in row 316 is "www.cnn.com." This does not match the server id criterion ("No" branch, step 502), so the ARM 226 determines if there are more rows in table A 234 at step 514. There are more rows in table A 234 ("Yes" branch, step 514), so the process reverts to step 500.

The server id column 300 in row 318 is examined, but there is not a server id match ("No" branch, step 502). The ARM 226 determines that there are no more rows in table A 234 ("No" branch, step 514), so the process returns to step 404 of Fig. 4. There was no match found in table A 234 ("No" branch, step 404), so the ARM 226 passes the request criteria to the next table (table B 236) at step 406. The server id column 320 of table B 236 is searched for a match with "www.msnbc.com" (step 408).

Now referencing Fig. 5, the server id in row 334 matches the criteria ("Yes" branch, step 502), so the network address column 322 is searched for a match with the network address criterion, "www.msnbc.com/news/myvideo2.htm." The network address in row 334 matches that of the criterion ("Yes" branch, step 506), so the ARM 226 proceeds to examine the protocol column 324 of table B 236 for a match with "Basic" protocol. The protocol column 324 contains the protocol name "NTLM" in row 334, so there is no match ("No" branch, step 510). There are more rows in table B 236 ("Yes" branch, step 514), so the ARM 226 reverts to step 500 and searches the server id column 320 beginning at row 336.

The server id column 320 of row 336 matches the server id authentication criterion ("Yes" branch, step 502), so the ARM 226 looks to the network address column of row 336 for a match at step 504. The network address in row 336 is "www.msnbc.com/news/*." This matches the network address criterion ("Yes" branch, step 506), so the protocol column 324 is examined at step 508. Row 336 contains "Kerberos" in the protocol column 324 ("No" branch, step 510), so at step 514, the ARM determines if there are more rows in table B 236. Row 338 remains to be checked, so the server id column 320 of row 338 is checked at step 500 for a match with the server id of the authentication criteria. Row 338 contains the wildcard symbol ("*"), so any server id matches this value. Therefore, a match is found ("Yes" branch, step 502). The network address column 322 is checked for a match with the request criteria at step 504. The network address column 322 of row 338 also contains the wildcard symbol, so this is also a match ("Yes" branch, step 506). The protocol column 324 of row 338 contains also contains the wildcard symbol ("*"), so at step 512, a match is found and the process reverts to step 408, where there is a match ("Yes" branch, step 408).

It is noted that if the ARM 226 cannot find a match in table B 236 or any other table ("No" branch, step 408), then the authentication response module 226 indicates that no matching credentials are found at step 412. In this example, however, row 338 amounts to a default response since the username 328 and 330 of row 338 will be used in formulating a response for any request having criteria that does not match any of the other rows. However, there are implementations in which a default response is not used.

At step 410, the response formulation module 228 utilizes the user name 328 ("Username Z") and the password 330 ("PWZ") found in row 338 to formulate an authentication response to transmit to the remote server 210 at step 414. If there is a secondary authentication request ("Yes" branch, step 416), then the response formulation module 228 formulates a secondary response. If not ("No" branch, step 416), then the process is complete.

It is noted that although the preferred implementation has been described as implementing a linear search of table A 234 and table B 236, it is not necessary to perform a linear search. Any type of search that provides satisfactory results can be used.

### Conclusion

The embodiments described above provide a way to automatically formulate an appropriate response to authentication requests received from one or more secured servers. A system administrator can configure the authentication response module to respond to any secured server desired. No user interface is required to formulate the response(s) to the authentication requests.

Although details of specific implementations and embodiments are described above, such details are intended to satisfy statutory disclosure obligations rather than to limit the scope of the following claims. Thus, the invention as defined by the claims is not limited to the specific features described above. Rather, the invention is claimed in any of its forms or modifications that fall within the proper scope of the appended claims, appropriately interpreted in accordance with the doctrine of equivalents.

## Claims

1. A method, comprising:
receiving an authentication request from a remote server;
automatically formulating an authentication response to the authentication request; and
transmitting the authentication response to the remote server.

2. The method as recited in claim 1, further comprising:
identifying a communications protocol used to transmit the authentication request; and
automatically formulating the authentication response according to the communications protocol.

3. The method as recited in claim 1, further comprising:
identifying a network address from the authentication request; and
automatically formulating the authentication response utilizing the network address.

4. The method as recited in claim 3, wherein the network address is a partial Internet universal resource locator (URL) designation.

5. The method as recited in claim 1, further comprising:
identifying a site identifier from the authentication request; and
automatically formulating the authentication response utilizing the site identifier.

6. The method as recited in claim 5, wherein the site identifier is a complete Internet universal resource locator (URL) designation.

7. The method as recited in claim 1, wherein the automatically formulating the authentication request further comprises:
identifying authentication criteria contained in the authentication request; and
using the authentication criteria to formulate the authentication response.

8. The method as recited in claim 1, wherein the automatically formulating the authentication request further comprises:
identifying authentication criteria contained in the authentication request;
searching a first authentication table for an entry that matches at least one criterion in the authentication criteria; and
utilizing one or more authentication credentials stored in a matching entry in the first authentication table to formulate the authentication response.

9. The method as recited in claim 8, further comprising:
searching a second authentication table for an entry that matches at least one criterion in the authentication criteria if a match was not found in the first authentication table; and
utilizing one or more authentication credentials stored in a matching entry in the second authentication table to formulate the authentication response.

10. An authentication table stored on a computer-readable medium, comprising:
one or more rows, each row being associated with a remote server;
a site identifier column that stores a site identifier in each row of the column, each site identifier uniquely identifying the remote server that is associated with the row in which the site identifier is located;
a protocol column that stores a protocol name in each row of the column, each protocol name identifying a protocol that is used in authentication requests that originate from the remote server that is associated with the row in which the protocol name is stored; and
a credentials column that stores one or more authentication credentials in each row of the column, each authentication credentials used to formulate an appropriate authentication response to an authentication request that is received from the remote server that is associated with the row in which the authentication credentials are stored.

11. The authentication table as recited in claim 10, wherein the authentication credentials further comprise a user name and password.

12. The authentication table as recited in claim 10, wherein:
the site identifier column further comprises a server identification column and a network address column;
the server identification column storing a server identifier in each row of the column, each server identifier uniquely identifying the remote server that is associated with the row in which the site identifier is located, and
the network address column storing a network address in each row of the column, each network address uniquely identifying a network address of content on the remote server that is associated with the row in which the network address is located.

13. The authentication table as recited in claim 12, wherein the network addresses stored in the network address column are universal resource locators (URLs) that identify Internet addresses.

14. A system, comprising:
memory;
an authentication response manager stored in the memory;
a first authentication response module stored in the memory, the first authentication response module containing a table that associates one or more authentication request criteria with respective authentication credentials;
wherein the authentication response manager is configured to receive an authentication request from a remote server, identify one or more authentication request criteria in the authentication request, search the table for an entry that matches the one or more authentication request criteria, and if a match is found, utilize the authentication credentials associated with the matching criteria to formulate an authentication response to the authentication request.

15. The system as recited in claim 14, further comprising a second authentication response module stored in the memory, the second authentication response module containing a table that associates one or more authentication request criteria with respective authentication credentials, and wherein the authentication response manager is further configured to search the table in the second authentication response module for a matching entry if no matching entry is found in the first authentication response module.

16. The system as recited in claim 15, wherein the second authorization response module is installable and removable from the authentication response manager.

17. The system as recited in claim 14, wherein the request criteria in the table of the first authentication response module further comprises a site identifier that uniquely identifies the remote server and a name of a communications protocol that identifies a protocol that is used in the authentication request.

18. The system as recited in claim 14, wherein the request criteria in the table of the first authentication response module further comprises a server identifier that uniquely identifies the remote server, a network address that identifies a memory partition in the remote server that contains requested content, and a name of a communications protocol that identifies a protocol that is used in the authentication request.

19. The system as recited in claim 18, wherein the network address is an Internet universal resource locator (URL).

20. The system as recited in claim 14, wherein the authentication credentials further comprises a user name and a password.

21. The system as recited in claim 14, wherein:
the remote server has a first partition and a second partition;
the authentication response manager is further configured to formulate a first authentication response that corresponds to the first partition, and a second authentication response that corresponds to the second partition.

22. A computer-readable medium containing computer-executable instructions that, when executed on a computer, perform the following steps:
receiving an authentication request from a remote server;
identifying request criteria from the authentication request;
identifying response credentials that correspond to the request criteria;
formulating an authentication response from the response credentials; and
transmitting the authentication response to the remote server.

23. The computer-readable medium as recited in claim 22, wherein the identifying the request criteria from the authentication request further comprises:
identifying a site identifier that uniquely identifies the remote server; and
identifying a communications protocol in which the authentication request is formatted.

24. The computer-readable medium as recited in claim 22, wherein the identifying the request criteria from the authentication request further comprises:
identifying a server identifier that uniquely identifies the remote server;
identifying a network address that identifies a specific partition of the remote server; and
identifying a communications protocol in which the authentication request is formatted.

25. The computer-readable medium as recited in claim 24, wherein the identifying a network address further comprises identifying an Internet universal resource locator (URL).

26. The computer-readable medium as recited in claim 22, wherein the identifying response credentials further comprises:
searching a first table to find a match between one or more of the authentication criteria and a table entry; and
retrieving one or more response credentials stored in the table entry that matches the authentication criteria.

27. The computer-readable medium as recited in claim 26, wherein the identifying response credentials further comprises:
searching a second table to find a match between one or more of the authentication criteria and a table entry when no match was found in the first table; and
retrieving one or more response credentials stored in the table entry that matches the authentication criteria.

28. The computer-readable medium as recited in claim 22, the response credentials further comprise a user name and password.

29. The computer-readable medium as recited in claim 22, wherein transmitting the authentication response to the remote server further comprises:
receiving a secondary request in response to the authentication response;
formulating a secondary response to the secondary request; and
transmitting the secondary response to the remote server.

30. An authentication response manager, comprising:
a first authentication response module; and
a response formulation module configured to receive an authentication request, identify certain request criteria in the authentication request, transmit the request criteria to the first authentication module, receive response credentials from the first authentication module, and formulate an authentication response.

31. The authentication response manager as recited in claim 30, further comprising a second authentication response module, wherein the response formulation module is configured to transmit the request criteria to the second authentication module if the response formulation module does not receive response credentials from the first authentication module.

32. The authentication response manager as recited in claim 30, wherein the response formulation module is further configured to transmit the authentication response to a network interface module for transmission to a remote server that transmitted the authentication request.

33. The authentication response manager as recited in claim 30, wherein the first authentication response module further comprises a table having one or more entries, each entry including one or more authentication request criteria and corresponding authentication credentials

34. The authentication response manager as recited in claim 33, wherein the authentication request criteria further comprises:
a site identifier that identifies a remote server that initiated the authentication request; and
a communications protocol according to which the authentication request is formatted.

35. The authentication response manager as recited in claim 33, wherein the authentication request criteria further comprises:
a server identifier that identifies a remote server that initiated the authentication request;
a network address identifier that identifies a partition on the remote server that contains secure content; and
a communications protocol according to which the authentication request is formatted.

36. The authentication response manager as recited in claim 35, wherein the network address identifier is an Internet universal resource locator (URL).

37. The authentication response manager as recited in claim 35, further comprising:
a first entry having a first server identifier and a first network address;
a second entry having the first server identifier and a second network address;
wherein the first network address identifies a first partition on a remote server identified by the first server identifier; and
wherein the second network address identifies a second partition on a remote server identified by the first server identifier.

38. The authentication response manager as recited in claim 33, wherein the authentication credentials further comprise a user name and password.

39. The authentication response manager as recited in claim 30, further comprising a second authentication response module that is installable and removable from the authentication response manager.
